# EUROPEAN PATENT APPLICATION

(11) **EP 1 239 642 A2**
(43) Date of publication of application: **11.09.2002**
(21) Application number: 01128178.9
(22) Date of filing: 27.11.2001
(51) Int. Cl.: H04L 29/06, H04L 12/28, G06F 9/46

(54) **System and method for enhanced HAVi based device implementation**

(30) Priority: 28.12.2000 US 752664
(71) Applicant: Gateway, Inc., North Sioux City, South Dakota 57049 (US)
(72) Inventor: Sullivan, Gary E., Trabuco Canyon, CA 92679 (US)
(74) Representative: Viering, Jentschura & Partner

(57) **Abstract**

The invention is a system method for providing extended functionality for a HAVi compatible device. The HAVi compatible device is connectable to a HAVi network. The extended functionality is defined by control data stored on a remote server external to the HAVi network. The remote server is connected to an external network. The external network comprises a network external to the HAVi network. The HAVi network comprises several other HAVi compatible devices. The system comprises an external network connection device for providing data communications between the HAVi network and the remote server. The external network connection device is connectable to the external network. The external network connection device is for receiving the control data from the remote server. The system further includes a control module, comprising a device control module (DCM) containing a special functional control module (FCM). The control module is for providing the extended functionality for the HAVi compatible device based on the control data.

## Description

### BACKGROUND OF THE INVENTION

### 1. Field of the Invention

The invention is a system and method for enhanced HAVi based device implementation. Specifically, the invention is a system method for providing extended functionality for a HAVi compatible device.

### 2. Description of the Prior Art and Related Information

Recently, a communications standard that allows all manner of digital consumer electronics, or home devices, to communicate with each other has been established by some of the world's leading manufacturers in the field. The standard, called the Home Audio Video Interoperability, or HAVi, standard allows users to enjoy the convenience of easy interoperability of these devices. The types of devices supported by HAVi include: tuner, VCR, clock, camera, AV disc, display, amplifier, modem, and Web proxy.

A specification has been developed for the HAVi standard. The HAVi specification was developed mainly for home entertainment audio visual (AV) networks, providing high bandwidth for transmitting multiple AV streams and featuring easy plug-and-play functionality, using an underlying IEEE-1394 digital interface. The HAVi specification defines a set of APIs and middleware capable of automatically detecting devices on the network, coordinating the functions of various devices, installing applications and user interface software on each device, and ensuring interoperability among multiple brands of devices. Some of the companies involved in developing the specification are:
Grundig AG,
Hitachi Ltd.,
Matsushita Electric Industrial Co.,
Royal Philips Electronics,
Sharp Corporation,
Sony Corporation,
Thomson Multimedia, and
Toshiba Corporation.
The HAVi specification is currently in its first version, last updated January 18, 2000, and can be found in .pdf format at www.HAVi.com.

HAVi technology allows all devices on a HAVi network to be operated from anywhere on the HAVi network, which is local in nature, using whichever device is nearest to the user. HAVi is a digital audio-visual (AV) networking initiative that provides a networking software specification for seamless interoperability among devices. Equally important, the HAVi specification is AV-device-centric, so it has been designed to meet the particular demands of digital audio and video. It defines an operating-system-neutral middleware that manages multi-directional AV streams, event schedules, and registries, while providing application program interfaces (APIs) for the creation of a new generation of software applications. Whatever the brand of device, the focus is on the control and content of digital AV streams. HAVi software takes advantage of the powerful resources of chips built into modern audio and video devices to give users the management function of a dedicated audio-video networking system.

The IEEE 1394 standard (by I.LINK or FIREWIRE) has been chosen as the interconnection medium. IEEE 1394 has more than enough capacity to simultaneously carry multiple digital audio and video streams around a local area, for example a house, and provides support for digital copy protection. Leading suppliers of consumer electronics are already committed to producing HAVi compatible devices.

The HAVi standard gives users instantly coordinated functionality among usable devices without that user becoming a system administrator. Each device added to the network automatically installs its own application and interface software. The complexity and sophistication has been built into HAVi compatible devices, with the power of the HAVi standard being harnessed to work behind in the background so that control is simple for the user. As each device is added to a local HAVi network, it's automatically registered by the system so that other devices know what it is capable of.

Devices may possess several functions across brands, which is not a problem with the HAVi network because HAVi has standardized the application programming interfaces of the most common AV functions. This means that a VCR can search for a device that offers a clock with the time-of-day and automatically set its own timers.

HAVi's upgradeable nature means that users are able to increase the functionality of devices as updates become available. Not even a home PC is required for a HAVi network to operate.

Functions on a device or device within the HAVi networking system may be controlled from another device within the system. For example, a search may be performed for an available VCR to record a TV program, with commands being given via a menu selection from another TV display.

Entertainment products from different manufacturers may communicate with each other when connected into a HAVi network. A variety of VCR's, hi-fis, DVD players, minidisc machines, active loudspeakers, set-top boxes may all be daisy-chained together to be presented on a TV for a user to control from one remote control device.

HAVi compliant devices automatically announce their presence and capabilities to every other device on the HAVi network, greatly simplifying installation and setup. The user of the HAVi network simply may add a device on a plug-and-play basis.
Complicated and difficult installation instructions are not required. Nor is any configuration of network addresses or device drivers required.

Today's i.LINK enabled camcorders and other devices are able to be controlled on a HAVi network for basic functions. Most HAVi compliant devices come with their own dynamic device control modules (DCMs). Updating functionality can be done by downloading/uploading new capabilities via the Internet. Also, additional or replacement products can simply be incorporated into the network.

As consumers incrementally build entertainment networks from a basic cluster to a home network, exciting new applications will emerge to offer additional flexibility, control and personalization to home entertainment. The HAVi standard makes it easier for companies to build and market new application programs by using HAVi's API's or programming in Java. Bridges will also be available to home control systems, security systems, communication systems and PC based applications.

The HAVi architecture is intended for implementation on consumer electronics (CE) devices and computing devices; it provides a set of services which facilitate interoperability and the development of distributed applications on home networks.
HAVi is intended for, but not restricted to, CE devices supporting the IEEE Std 1394-1995 [3] (and future extensions) and IEC 61883 [4] interface standards. Since a goal of the HAVi architecture is to be future-proof, interoperability is more than a common command set. HAVi is a software architecture that allows new devices to be integrated into the home network and to offer their services in an open and seamless manner. The HAVi Architecture provides: a set of software elements along with the protocols and APIs needed to achieve interoperability; device abstraction and device control models; an addressing scheme and lookup service for devices and their resources; an open execution environment supporting visual presentation and control of devices, and providing runtime support for third party applications; communication mechanisms for extending the environment dynamically through plug-and- play capabilities; a versioning mechanism that preserves interoperability as the architecture evolves; and management of isochronous data streams. The specification describes the constructs HAVi implements to support interoperability.

One of the basic operating elements used multiple times in HAVi networks comprises a functional control module (FCM). A FCM is a HAVi software element that provides an interface for controlling a specific functional component of a device. Another basic element comprises a device control module (DCM). A DCM is a HAVi software element that provides an interface for controlling general functions of a device. A DCM provides the interface to the HAVi network, exposing a set of functionality to the network. FCMs are functional building blocks that may be combined to create the total functionality of a physical or virtual multimedia device. Two DCMs could use the same set of FCMs to create two different virtual devices.

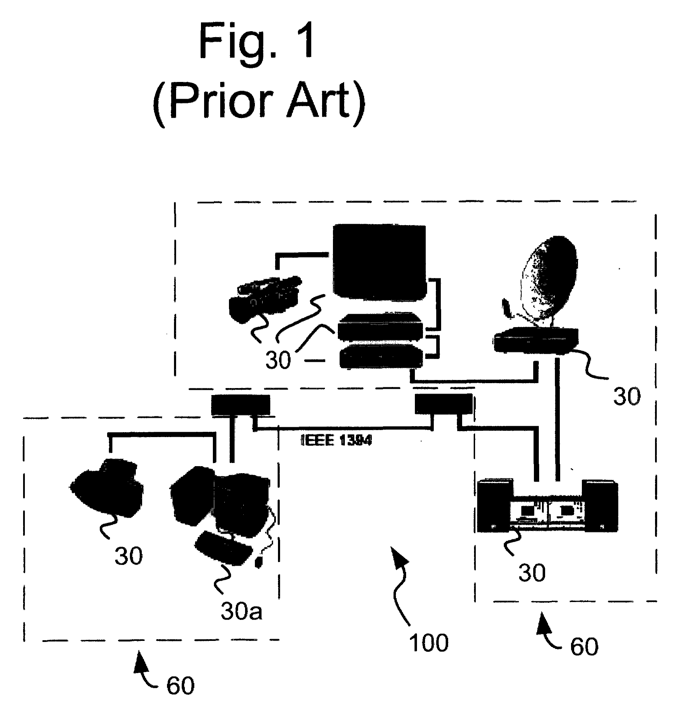

With reference to Fig. 1, the underlying structure for a HAVi network 100 comprises interconnected clusters 60 of HAVi devices 30. Typically, there will be several clusters 60 in a network 100, with one per floor or one per room. Each cluster 60 will work as a set of interconnected devices 30 to provide services to users. Often one device 30a will control other devices 30. However, the HAVi architecture is sufficiently flexible to allow networks 100 with no single master control device.

The HAVi architecture supports legacy devices 30, i.e., devices 30 that are at least not fully compatible with the HAVi specification. This is important since the transition to networked devices 30 is gradual - with manufacturers not suddenly producing only networked devices 30 and consumers not suddenly replacing their existing devices 30. Legacy devices 30 can also be characterized by the degree to which they support 1394 and industry standard protocols for 1394 such as IEC 61883.

Each device 30 has, as a minimum, enough functionality to allow it to communicate with other devices 30 in the system 100, with the exception of legacy devices 30 which are handled as explained below. During the course of interaction, devices 30 may exchange control information and data in a peer-to-peer fashion. This ensures that, at the communication level, no one device 30 is required to act as a master or controller for the system 100. However, it also allows a logical master or controller 30a to impose a control structure on the basic peer-to-peer communication model. The HAVi control model makes a distinction between controllers 30a and controlled devices 30. A controller 30a is a device that acts as a host for a controlled device 30. A controlled device 30 and its controller 30a may reside on the same physical device 30 or on separate physical devices30a. In terms of the HAVi control model, a controller 30a hosts a device control module (DCM) for the controlled device 30. The control interface for a device 30 is exposed via an API of the DCM. This API is the only access point for applications to control the device 30. For instance, an intelligent television in the family room might be the controller 30a for a number of interconnected devices 30. A controlled device 30a could contain Java bytecode that constructs a user interface for the device 30 and allows external control of the device 30. When the devices 30 are first connected, the controller 30a obtains the user interface and control code for the device 30 comprising the DCM for the device. An icon representing the device 30 may then appear on the television screen, and manipulating the icon may cause elements of the DCM to actuate the represented device or devices in prescribed ways. The network 100 allows a single device 30, or a group of devices 30 communicating amongst themselves, to deliver a service to a user. When it is necessary for a device 30 to interact with a user, a GUI for the device may be presented on a device 30 with display capabilities (possibly the device in question or possibly a different device).

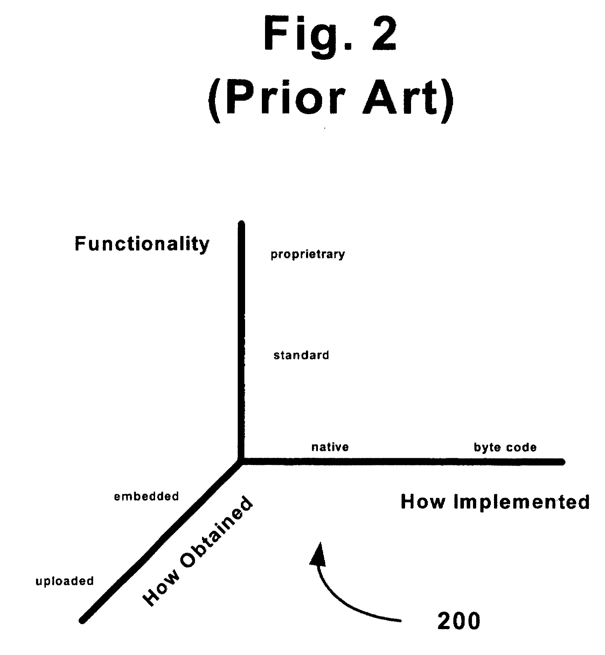

With reference to Fig. 2., DCMs are a central concept to the HAVi architecture and the source of flexibility in accommodating new devices 30 and features. A chart 200 in Fig. 2 illustrates how DCMs can be distinguished in several ways. The first DCM characteristic is how the DCM is obtained by the controller. For example, the DCM may be embedded. An embedded DCM is a DCM that is part of the resident software on a controller 30a. A DCM may also be uploaded. An embedded DCM is one that is obtained. from some source external to the controller 30a and is dynamically added to the software on the controller 30a.

The second characteristic is whether a DCM is controller 30a dependent or controller 30a independent. For example, a DCM may be native. A native DCM is one that is implemented for a specific platform. It may include machine code for a specific processor or access platform specific APIs for a device. A DCM may comprise a bytecode DCM. A bytecode DCM is one that is implemented in Java bytecode.

Finally, DCMs can be distinguished by their functionality, or, conversely, their range of use. For example, a DCM may comprise a standard DCM. A standard DCM is one that provides standard HAVi APIs. Such a standard DCM provides basic functionality but is able to control a wide range of devices. A DCM may comprise a proprietary DCM. A proprietary DCM is a DCM that provides vendor-specific APIs in addition to the standard HAVi APIs. Such a proprietary DCM would offer additional features and capabilities over a standard DCM but could control a narrower range of devices, perhaps only a specific device 30 or model of a device 30.

A DCM, is a software abstraction of a device 30 providing device 30 specific functionality to the HAVi network 100. HAVi applications will not communicate with a device 30 directly but through the DCM of the device 30 or one of its FCMs. A DCM is a HAVi object in the sense that it is registered in a general registry with other HAVi objects, and can communicate with other HAVi objects via a general HAVi Messaging System. DCMs and FCMs are registered with their type and a HAVi unique identifier (HUID). The HUID allows applications to find the DCM or FCM after partial system unavailability, as when the device 30 represented by the DCM is momentarily removed from the network 100. A DCM provides a set of basic methods for device 30 control and observation. The DCM can be used by HAVi devices 30 as well as any application.

A distinction is made between devices 30 which are each described to the network 100 by their DCM, and functional components of a device 30 which are described to the network 100 by FCMs within the DCM for the device 30. A good example of this distinction can be found in a normal TV set. Although the TV set is generally one physical box, it contains several distinct controllable entities, e.g. the tuner, display, audio amplifier, etc. The controllable entities within a device are called functional components. The TV is the device 30 defined to the network with its DCM, and the functional components are defined by FCMs within the DCM.

### SUMMARY OF THE INVENTION

The invention is a system and method for providing extended functionality for a HAVi compatible device. The HAVi compatible device is connectable to a HAVi network. The extended functionality is defined by control data stored on a remote server external to the HAVi network. The remote server is connected to an external network. The external network comprises a network external to the HAVi network. The HAVi network comprises several other HAVi compatible devices.

The system comprises an external network connection device for providing data communications between the HAVi network and the remote server. The external network connection device is connectable to the external network. The external network connection device is for receiving the control data from the remote server.

The system further includes a control module, comprising a device control module (DCM) containing a special functional control module (FCM). The control module is for providing the extended functionality for the HAVi compatible device based on the control data.

### BRIEF DESCRIPTION OF THE DRAWINGS

Fig. 1 is a block diagram illustrating the underlying structure for a HAVi network according to the prior art;
Fig. 2 is a chart illustrating how prior art DCMs can be categorized;
Fig. 3 is a block diagram illustrating a system for providing extended functionality for a HAVi compatible device according to the present invention;
Fig. 4 is a flow diagram illustrating the steps performed in a method performed by the system of Fig. 3; and
Fig. 5 a block and data flow diagram illustrating the components and a process for retrieving control data from a remote server of the system of Fig. 3.

### DETAILED DESCRIPTION OF THE PREFERRED EMBODIMENTS

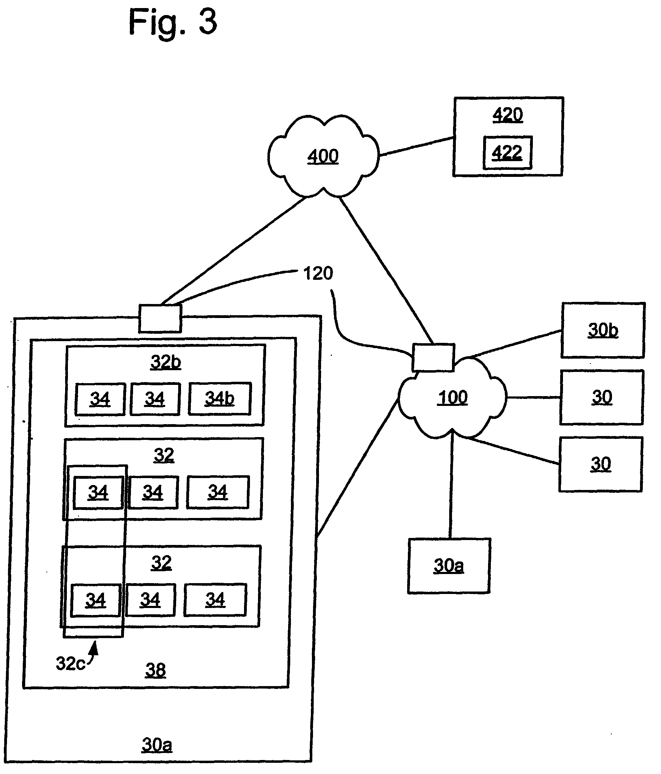

With reference to Fig. 3, a system for providing extended functionality for a HAVi compatible device 30b is shown. The HAVi compatible device 30b is connectable to a HAVi network 100. The extended functionality is defined by control data 422 stored on a remote server 420 external to the HAVi network 100. The remote server 420 is connected to an external network 350. The external network 350 comprises a network external to the HAVi network 100. The HAVi network 350 comprises several other HAVi compatible devices 30.

The system comprises an external network connection device 120 for providing data communications between the HAVi network 100 and the remote server 420. The external network connection device 120 is connectable to the external network 350. The external network connection device 120 is for receiving the control data 422 from the remote server 420.

The system further includes a control module, shown as device control module (DCM) 32b containing a special functional control module (FCM) 34b in Fig. 3. The control module 32b-34b is for providing the extended functionality for the HAVi compatible device 30b based on the control data 422. In Fig. 3, the DCM 32b is shown containing several FCMs 34 and the special functional control module 34b. The DCM 32b is for presenting the functionality of the HAVi compatible device 30b to the HAVi network 100.

The device control module 32b may be included on a master control device 30a comprising a processor connected to the HAVi network 100. The processor 30 has a memory module 38 for storing the DCM 32b and functional control module 34b. DCMs 32 for the other HAVi compatible devices 30 are present on the master control device 30, with each of the DCMs containing FCMs 34 for those devices.

The processor 30a may further comprise the external network connection device 120 as opposed to the external network connection device 120 being directly connected to the network 120. The external network connection device 120 may comprise a modem, cable modem, ISDN device, or DSL connector.

The processor 30a is for presenting the device control module 32b to a user of the HAVi network 100 for providing the user with the capability of controlling the HAVi compatible device 32a with the extended functionality. The device control module 32b is presented with the its functional control modules 34-34b in the display presented by the DCM 34b described in the HAVi specification. There is a FCM 34b for the legacy device 30b and an FCM 34b for a virtual device representing the functionality of a set of control data 422 stored on a remote server 420. A single DCM 32b exposes the combined functionality of the legacy device 30b and the control data 422 so that it has the same DCM 32b interface as a more intelligent, or contemporary, non-legacy device, and therefore causes the legacy device 30b to appear to the user as if it were a non-legacy device 30b.

The HAVi compatible device 30b may comprise a legacy device wherein the extended functionality is for causing the HAVi compatible device 30b to function as a contemporary device with respect to a user of the HAVi network 100. For example, the HAVi compatible device 30b may comprise a compact disk player not having built in ability for presenting artist and song information for a compact disk inserted into the compact disk player. The control data 422 may thus be for presenting artist and song information for the compact disk to the user. The control data 422 would thus comprise artist and song information matched to one or more identification codes read from the compact disk such that the artist and song information may be presented to the user for selection.

Another embodiment of the system comprises a first usable device 30b comprising one of a plurality usable devices 30 capable of being connected to a local network 100. Each usable device 30, 30a, 30b is capable of receiving commands from a user of the local network 100.

The external network connection device 120 is for providing data communications between the local network 100 and a remote server 420 connected to the external network 350. The external network connection device 120 is thus connectable to the external network 350. The network connection device 120 is for receiving control data 422 from the remote server 420. The control data 422 defines extended functionality for a first 30b of the one or more of the plurality of usable devices 30-30b. One or more control modules 32b-34b is for providing the extended functionality for the one or more usable devices 30b based on the control data 422.

One usable device 30a of the plurality of usable devices comprises a processor having a device control module 32b. The device control module 32b comprises a first functional control module 34b for presenting the extended functionality through presentation of the device control module 32b to a user of the processor 30a for controlling the first usable device 30b, thereby allowing the user to use the extended functionality.

The extended functionality comprises a plurality of extended functions for controlling the first usable device 30b. The device control module 32b comprises a plurality of functional control modules 34-34b. Each functional control module 34-34b comprises a subset of the plurality of extended functions.

The plurality of usable devices 30, 30a, 30b may comprise two or more processors 30a. The device control module 32b may present a selected one of the functional control modules 34-34b to each of the two or more processors 30a, thereby allowing a user of each of the two or more processors 30a to control the first device 30b based on the respective subset of extended functions of the respective functional control module 34-34b presented to the respective processor 30a.

One or more device control modules 32c may be constructed from various functional control modules 34 from other device control modules 32. This is useful for usable devices 30 that may have functionality defined by functional control modules from two or more different device control modules 32 that may present the device control module 32c to the HAVi network 100 with those functional control modules 34.

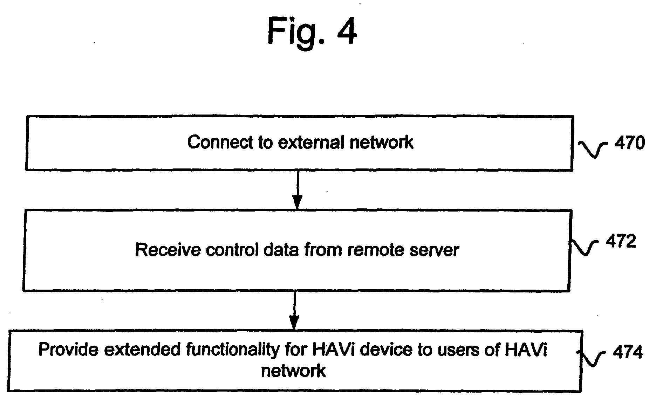

With reference to Fig. 4 a flow diagram illustrating the steps performed in a method for providing extended functionality for a HAVi compatible device 30b is shown. The first step comprises providing data communications between the HAVi network 100 and the remote server 420, step 470. The next step is that the control data 422 is received from the remote server 420, step 472. The extended functionality for the HAVi compatible device 30b is then provided to a user of the HAVi network 100 based on the control data 422, step 474. The step of providing the extended functionality to the user comprises providing the user with the capability of controlling the HAVi compatible device 30b with the extended functionality by presenting the device control module 32b to the user of the HAVi network 100.

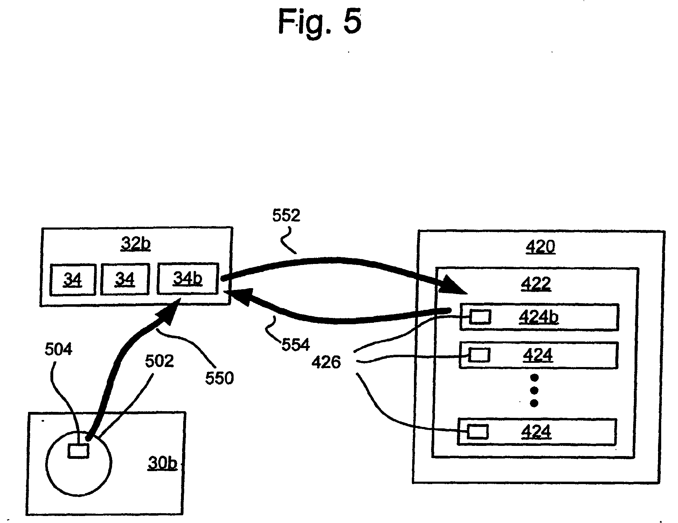

With reference to Fig. 5, a diagram illustrating the components and a process for retrieving the control data 422 from the server 420 is shown. The server 420 contains the control data 422. The control data 422 may be formatted into a database containing control data records 424. Each control data record 424 includes, for example, control data for a compact disk title. Each control data record 424 may include an identification code 426 provided by a publisher of the publisher of a respective compact disk.

The HAVi device 30b may be loaded with a compact disk 502 having an identification code 504. When the compact disk 502 is loaded into the HAVi device 30b, the identification code 504 is provided to the DCM 32b for the HAVi device 30b, step 550. The identification code 504 read from the compact disk 502 is forwarded to the remote server 420, step 552. The identification code for the compact disk 504 is matched with an identification code 426 in a control data record 424b. Title and artist information from the control data record 424 is transmitted back to the FCM 34b of the DCM 32 that provides the extended functionality for the HAVi device 30b, step 554. The artist and title information may now be presented for selection by a user on one of the HAVi devices 30, 30a or30b in the HAVi network 300.

The above example illustrates operation of the system wherein the HAVi device 30b is a compact disk player. However, those skilled in the art would recognize other combinations of HAVi devices 30 and types of control data 422. For example, the HAVi device 30b may comprise a television set that does not have digital menu presentation firmware built in. In this case, the control data record 424 that is matched may include digital channel grid information for presenting local television program information. The DCM 32b for the television 30b may convey a zip code or a geographic location code for identifying the local television viewing area for the user. The geographic location code may comprise the identification code 504 that is matched with the control data record identification code 426 in the control data record 424. Local television program information may thus be downloaded from the server 420 to the FCM 34b for presentation on the viewing screen of the television 30b through the DCM 32b.

While the particular method and apparatus shown and described herein in detail is fully capable of attaining the objects of this invention, it is understood that the description and drawings represent the presently preferred embodiment of the invention and are, as such, a representation of the subject matter which is broadly contemplated by the present invention. It is further understood that the scope of the present invention fully encompasses other embodiments that may become obvious to those skilled in the art, and that the scope of the present invention is accordingly limited by nothing other than the appended claims.

## Claims

1. A system for providing extended functionality for a HAVi compatible device, the HAVi compatible device being connectable to a HAVi network, the extended functionality defined by control data stored on a remote server external to the HAVi network, the remote server being connected to an external network, the external network comprising a network external to the HAVi network, comprising:
an external network connection device for providing data communications between the HAVi network and the remote server;
the external network connection device connectable to the external network;
the external network connection device for receiving the control data; and
a control module for providing the extended functionality for the HAVi compatible device based on the control data.

2. The system of claim 1 wherein the control module comprises a functional control module.

3. The system of claim 2 wherein the control module further comprises a device control module.

4. The system of claim 3 wherein the device control module comprises a processor connected to the HAVi network, the processor having a memory module for storing the device control module; the processor further comprising the external network connection device.

5. The system of claim 4 wherein the processor is for presenting the device control module to a user of the HAVi network for providing the user with the capability of controlling the HAVi compatible device with the extended functionality.

6. The system of claim 1 wherein the HAVi compatible device comprises a legacy device wherein the extended functionality is for causing the HAVi compatible device to function as a contemporary device with respect to a user of the HAVi network.

7. The system of claim 6 wherein the HAVi compatible device comprises a compact disk player not having built in ability for presenting artist and song information for a compact disk inserted into the compact disk player, and wherein the control data is for presenting artist and song information for the compact disk to the user.

8. The system of claim 7 wherein the control data comprises artist and song information matched to one or more identification codes read from the compact disk such that the artist and song information may be presented to the user for selection.

9. A system comprising a first usable device comprising one of a plurality usable devices capable of being connected to a local network, each usable device being capable of receiving commands from a user of the local network:
an external network connection device for providing data communications between the local network and a remote server connected to an external network, the external network connection device connectable to the external network, the external network connection device for receiving control data from the remote server, the control data defining extended functionality for a first of the one or more of the plurality of usable devices; and
a control module for providing the extended functionality for the first usable device based on the control data.

10. The system of claim 9 wherein a second of the plurality of usable devices comprises a processor having a device control module.

11. The system of claim 10 wherein the device control module comprises a first functional control module, the device control module for presenting the extended functionality to a user of the processor for controlling the first usable device, thereby allowing the user to use the extended functionality.

12. The system of claim 10 wherein the extended functionality comprises a plurality of extended functions for controlling the first usable device; two or more device control modules each comprising a plurality of functional control modules, each functional control module comprising a subset of the plurality of extended functions, the plurality of usable devices comprising two or more processors, each of the device control modules for presenting selectively to one of the two or more processors, thereby allowing a user of each of the two or more processors to control the first device based on the respective subset of extended functions of the respective functional control modules of the device control module presented to the respective processor.

13. A method for providing extended functionality for a HAVi compatible device, the HAVi compatible device being connectable to a HAVi network, the extended functionality defined by control data stored on a remote server external to the HAVi network, the remote server being connected to an external network, the external network comprising a network external to the HAVi network, the method comprising the steps of:
providing data communications between the HAVi network and the remote server;
receiving the control data from the remote server; and
providing the extended functionality for the HAVi compatible device based on the control data.

14. The method of claim 13 comprising providing the user with the capability of controlling the HAVi compatible device with the extended functionality.

15. The method of claim 13 wherein the HAVi compatible device comprises a legacy device wherein the extended functionality is for causing the HAVi compatible device to function as a contemporary device with respect to a user of the HAVi network.

16. The method of claim 15 wherein the HAVi compatible device comprises a compact disk player not having built in ability for presenting artist and song information for a compact disk inserted into the compact disk player, and wherein the control data is for presenting artist and song information for the compact disk to the user.

17. The method of claim 16 comprising reading one or more identification codes from the compact disk and matching the one or more identification codes with the control data to present the artist and song information such that the artist and song information may be presented to the user for selection based on the identification code.
